# EUROPÄISCHE PATENTSCHRIFT

(11) **EP 1 397 009 B1**
(45) Veröffentlichungstag und Bekanntmachung des Hinweises auf die Patenterteilung: **10.08.2005**
(21) Anmeldenummer: 02019646.5
(22) Anmeldetag: 03.09.2002
(51) Int. Cl.: H04Q 3/00

(54) **Verfahren und Vorrichtung zur Nachrichtenlenkung in SS7-Netzen**
Method and device for messages routing in SS7 networks
Méthode et dispositif de routage de messages dans les réseaux SS7

(43) Veröffentlichungstag der Anmeldung: 10.03.2004
(73) Patentinhaber: SIEMENS AKTIENGESELLSCHAFT, 80333 München (DE)
(72) Erfinder: Gradischnig, Klaus David, Reston, VA 20194-1977 (US)

(56) Entgegenhaltungen:
- DE-A- 19 930 116
- US-A- 5 550 914

## Beschreibung

In Kommunikationsnetzen, in denen das durch die International Telecommunication Union ITU genormte zentrale Zeichengabesystem Nr. 7 bzw. Common Channel Signaling System 7 CCS7, auch SS7, gemäß der Recommendations ITU-T Q.700 und folgende zur Übermittlung von Nachrichten eingesetzt wird, erfolgt die Kommunikation zwischen zwei Signalisierungspunkten oder Signaling Points SP, d.h. Knoten und/oder Endpunkten des Kommunikationsnetzwerkes, über Verbindungen, die in diesem Kontext Signaling Links oder SS7-Links genannt werden. Ein Knoten wird auch als Signaling Transfer Point STP bezeichnet, ein Endpunkt hingegen wird auch als Signaling End Point SEP bezeichnet.

Wie in ITU-T Q.700ff beschrieben, ist es in SS7 Kommunikationsnetzen möglich, Signaling Links zu sogenannten Signaling Link Sets zusammenzufassen. Ein Signaling Link Set umfaßt jeweils zumindest einen Signaling Link, maximal jedoch 16 Signalink Links.

Ebenfalls in ITU-T Q.700ff ist die Architektur des SS7 beschrieben. Unterschieden werden verschiedene Protokollschichten, hier Level genannt. Level 1-3 bilden den Message Transfer Part MTP. Mehrere Level 4 Protokolle sind im SS7 definiert und werden hier User Parts UP genannt. Beispiele hierfür sind der Telephone User Part TUP, der ISDN User Part ISUP oder der Signaling Connection Control Part SCCP. Nachrichten dieser User Parts werden durch den MTP gesichert übertragen.

In bekannten SS7 Implementierungen werden bislang Nachrichten nicht ursprungsbezogen, sondern rein zielbezogen geroutet. Es kann jedoch von Vorteil sein, Nachrichten zu einem Ziel von unterschiedlichen Ursprüngen über verschiedene Wege zu leiten. Gründe dafür können z.B. das Vermeiden bestimmter Nachrichtenwege oder das Einhalten von geschäftlichen oder sicherheitsrelevanten Vereinbarungen sein. Ein weiterer Anwendungsfall für ursprungsabhängige Nachrichtenlenkung bzw. ursprungsabhängiges Routing tritt auf, wenn zwischen zwei Knoten, beispielsweise zwischen einem Signaling Transfer Point STP und einem Home Location Register HLR, aufgrund hoher zu erwartender Last mehrere Link Sets vorzusehen sind.

Mehrere Link Sets zwischen zwei Signalisierungspunkten können vorgesehen werden, um die maximale Anzahl der Links und damit die Übertragungskapazität zwischen diesen beiden Signalisierungspunkten zu erhöhen (ein Link Set kann maximal 16 Links aufweisen). In einem solchen Fall soll der Verkehr vom STP zum HLR aus Gründen der Lastteilung ursprungsabhängig auf die einzelnen Link Sets verteilt werden soll. Dabei kann ein zusätzliches Problem auftreten, wenn die mehreren Link Sets zwischen den Signalisierungspunkten standardgemäß implementiert sind. Da gemäß ITU Standard in einem MTP Netz zwischen zwei Signalisierungspunkten nur ein Link Set vorsehbar ist, müssen in diesem Fall die mehreren Link Sets in zumindest einem der Signalisierungspunkte, vorteilhaft etwa im STP, unterschiedlichen logischen Message Transfer Part MTP Netzwerken zugeordnet sein. In diesem Fall stellt sich das zusätzliche Problem, wie eine Nachricht, welche in einem Netz empfangen wurde, über ein in einem anderen Netzwerk gelegenes Link Set weitergeleitet werden kann.

Desgleichen können Nachrichten durch den MTP in einem STP nur in dem Netz weitergeleitet werden, in dem sie empfangen wurden. Ferner sind folgende Techniken bekannt:

Screeningfunktionen, beispielsweise gemäß ITU-T Q.705, erlauben eine Differenzierung derart, daß z.B. Nachrichten von einem bestimmten Ursprung bzw. von einem bestimmten Link Set nicht zu bestimmten Zielen geroutet werden dürfen. Diese Funktion kann mit einer Vergebührungsfunktion verbunden werden. Dabei können sowohl Ursprünge bzw. Link Sets als auch Ziele zu Gruppen zusammengefaßt werden, welche gleich behandelt werden. Diese Methode erlaubt allerdings nur eine Ja/Nein Entscheidung, und normalerweise werden (mit Ausnahme des wegen Problemen mit der Routenplanung aus Q.705 entfernten Outgoing Link Set/DPC Screening) alle Nachrichten, welche die Screeningfunktion passieren, zu jeweils einem Ziel identisch geroutet.

Eine weitere bekannte Methode besteht darin, Ersatzwege zu bestimmten Zielen nicht oder nur teilweise für nicht im eigenen Knoten entstehenden Verkehr, sogenannten Fremdverkehr, zuzulassen. Dabei wird so vorgegangen, daß, wenn ein höher priorer Ersatzweg zu einem Ziel nicht für Fremdverkehr zugelassen ist, auch niedriger priore Ersatzwege zum gleichen Ziel nicht zugelassen sind. Hier besteht eine wesentliche Einschränkung darin, daß die höher- bzw. höchstprioren Routen unabhängig vom Ursprung verwendet werden und auch die Priorität der Routen, falls erlaubt, identisch ist.

Weiters ist in EP 1 130 930 ein Verfahren offenbart, bei dem Link Sets in Gruppen eingeteilt werden und bei dem die für eine Nachricht erlaubten Wege zu einem Ziel abhängig sind von der Zugehörigkeit des Ursprungs, d.h. des Link Sets, auf dem die Nachricht empfangen wurde, zu einer Gruppe. Auch hier besteht die Einschränkung darin, daß die höher- bzw. höchstprioren Routen unabhängig vom Ursprung verwendet werden und auch die Priorität der Routen, falls erlaubt, identisch ist.

Ebenso ist eine Überprüfung bekannt, welche sicherstellt, daß Nachrichten von einem Link Set nicht wieder über dasselbe Link Set weitergeleitet werden (Vermeidung von sog. Pingpong-Schleifen). Dies dient jedoch nur zur Vermeidung von Fehlern, nicht aber zum ursprungsabhängigen Routen.

Ferner ist in WO99/55098 und WO00/11883 offenbart, wie Nachrichten über physikalische oder virtuelle Tunnel in einem Knoten MTP Netzwerkgrenzen überschreiten können. Es ist ferner offenbart, wie mit diesen Methoden gewisse Screeningfunktionen realisiert werden können. Das ursprungsabhängige Routing wird dadurch aber ebensowenig gelöst wie durch die Screeningfunktionen. Das Problem der Netzwerkgrenzenüberschreitung wird hingegen gelöst. Die beiden Lösungen haben aber folgenden Nachteile:
- Alle in einem Netzwerk ankommenden Nachrichten werden über dieselben Netzwerke bzw. dasselbe andere Netzwerk weitergeleitet, das ursprungsabhängige Routing ist damit nur sehr eingeschränkt realisierbar.
- Die physikalischen Tunnel gemäß WO99/55098 haben daneben den Nachteil, daß sie physikalische Ressourcen verwenden, indem sie zwei logische Netzwerke über ein physikalisches Link Set verbinden. Neben dem nachteiligen Verbrauch von Ressourcen wird dadurch der Verkehr zwischen beiden Netzen auch hinsichtlich des Volumens limitiert.
- Die virtuellen Tunnel haben daneben auch noch den Nachteil, daß ihre volle, standardkonforme Realisierung -- insbesondere für das MTP Netzwerkmanagement -- für bestehende Implementierungen sehr aufwendig sein können.

Es ist außerdem möglich, Routingtabellen ursprungsabhängig oder abhängig vom Link Set eingehender Nachrichten zu definieren. Zwar ist diese Methode die flexibelste, doch erfordert sie einen hohen Aufwand an Speicherplatz für die Routingtabellen und ein sehr komplexes und zeitaufwendiges Netzwerkmanagement, unter anderem deswegen, weil dann nach Ereignissen, welche eine Änderung von Routingtabellen erfordern, eine Vielzahl von Routingtabellen geändert werden müssen. Auch ist die Implementierung einer solchen Funktion, insbesondere in bereits bestehenden Systemen, aufwendig und schwierig. Ferner ist eine Überschreitung von Netzwerkgrenzen dadurch nicht gegeben.

Schließlich ist eine Weiterentwicklung zum vorgenannten Verfahren bekannt, die entgegen dem ITU Standard in einem Knoten in einem logischen Netzwerk mehrere logische Adressen, hier Signaling Point Codes SPC, vorsieht, von denen aus jeweils separate Link Sets zu einem bestimmten Nachbarknoten führen können und in denen ankommende Nachrichten ursprungsabhängig geroutet werden können. Zwar löst diese Methode alle der genannten Probleme, ist aber ebenfalls äußerst aufwendig hinsichtlich der Ressourcenbelegung und der Realisierungsaufwandes. Dies gilt speziell für bereits bestehende Systeme.

Ein weiteres Beispiel ist aus DE 19930116 bekannt.

Es ist daher Aufgabe der vorliegenden Erfindung, ein effizientes Verfahren anzugeben, das unter Verwendung von in existierenden System vorhandenen oder einfach zu realisierenden Datenstrukturen ursprungsabhängiges Routing ermöglicht.

Diese Aufgabe wird durch ein Verfahren zur Nachrichtenlenkung gemäß der Merkmale der Patentansprüche 1 und 2 sowie durch einen Signaling Transfer Point gemäß der Merkmale des Patentanspruches 8 gelöst.

Bevorzugte Ausführungsformen sind Gegenstand der abhängigen Ansprüche.

Die vorliegende Erfindung stellt ein flexibles, insbesondere auch für flexible Lastverteilung des Verkehrs über mehrere direkt an einem benachbarten ersten Netzelement HLR terminierende Link Sets LS9, LS10 geeignetes Verfahren der ursprungsabhängigen Nachrichtenlenkung in einem Netzknoten STP vor, welches vorteilhaft unter Verwendung von in existierenden System oft bereits vorhandenen oder einfach zu realisierenden Datenstrukturen die zugrundeliegende Aufgabe löst.

Ausgehend von einer Realisierung eines Nachrichtenknotens STP, welcher mehrere logische Netzwerke NID1, NID2 unterstützt, wird ein zweistufiger Routingprozess eingeführt. In einer ersten Stufe wird ein logisches Netzwerk, in welchem die Nachricht weiter geroutet werden soll, ausgewählt. In einer zweiten Stufe wird die Nachricht im ausgesuchten Netzwerk geroutet. Wichtig dabei ist, daß das für die zweite Stufe ausgewählte Netzwerk nicht mit dem Netzwerk identisch sein muß, zu dem das Link Set gehört, über welches die Nachricht empfangen wurde.

Dabei bedeutet die Verwendung von logischen Netzwerken in einem Knoten STP nicht notwendigerweise, daß tatsächlich unterschiedliche reale Netzwerke vorhanden sind. Vielmehr ist es möglich, daß sich die aus der Sicht des Knotens STP unterschiedlichen logischen Netze den Adressierungsraum eines gemeinsamen realen Netzes teilen.

Zur Auswahl des für die zweite Stufe erforderlichen (logischen) Netzwerkes können Ursprung, z.B. Kommunikationsadresse des Ursprungsknotens und/oder eingehendes Link Set sowie die Kommunikationsadresse des Zielknotens der Nachricht verwendet werden. Natürlich können sowohl Ursprünge als auch Ziele jeweils zu Gruppen zusammengefaßt werden, um die Verwaltung zu vereinfachen und Ressourcen zu sparen. Ferner kann es von Vorteil sein, wenn diese Auswahl nicht ein einziges Netzwerk für die zweite Stufe liefert, sondern eine nach Priorität geordnete Liste von Netzwerken. Die zweite Stufe des Routing wird dann in dem höchstprioren in der Liste enthaltenen Netzwerk durchgeführt, in dem aktuell ein Weg zu dem Ziel verfügbar ist. Auch ist es möglich, den Nachrichtenfluß über mehr als eines der Netzwerke weiterzuleiten, indem z.B. mittels des in der Nachricht enthaltenen SLS Wertes oder eines anderen Merkmales der Nachricht eines von zwei oder mehreren ansonsten gleichwertigen Netzwerken (Netzwerke mit verfügbaren Wegen zum Ziel und gleicher Priorität in der Liste) zur Weiterleitung ausgewählt werden.

Zur einfachen Realisierung der ersten Stufe ist es von Vorteil, wenn existierende, dem Nachrichtenroutingprozeß bereits zur Verfügung stehende, administrierbare Datenstrukturen entsprechend erweitert werden können. Wenn die Datenstrukturen bereits Platz für die benötigten Daten aufweisen, ist es nur noch notwendig, den Administrationsprozeß anzupassen, um die benötigten Daten in die Datenstruktur eingeben zu können. Dies ist in bestehenden Systemen in vielen Fällen beispielsweise durch einen einfachen Patch bzw. Softwareupdate möglich.

Die Anpassung des Nachrichtenroutingprozesses an das zweistufige Routingverfahren für das eigentliche Routing ist generell sehr einfach und kann in bestehende Systeme meist mittels eines einfachen, zentralen Patches eingeführt werden.

Im Zusammenhang mit der vorliegenden Erfindung kann eine Erweiterung des MTP Netzwerkmanagement erforderlich sein. Da das Netzwerkmanagement oft spezielle Anforderungen an das Routing von Netzwerkmanagementnachrichten hat, routet es die Nachrichten oft direkt, ohne den normalen Nachrichtenroutingprozess zu benutzen. Ein Problem besteht nun darin, daß die für die erste Stufe verwendeten Datenstrukturen dem Netzwerkmanagement nicht zur Verfügung stehen. Selbst wenn diese Datenstrukturen zur Verfügung stehen würden, ist eine Anpassung an mehreren Stellen notwendig. Ein weiteres Problem für das Netzwerkmanagement ist, daß es die Routingtabellen nicht nur zum eigentlichen Routen verwendet, sondern auch zur Kontrolle bestimmter Aktionen, z.B. um festzustellen, welche Nachbarknoten über die Erreichbarkeit eines Zieles informiert werden müssen.

Sollen Anpassungen des Netzwerkmanagements vermieden werden, gibt es mehrere Möglichkeiten. Entweder wird vollständig auf die betroffenen Teile oder Funktionen des Netzwerkmanagements verzichtet oder ein eingeschränktes Netzwerkmanagement durchgeführt.

Basiert das gewählte Routingkonzept beispielsweise auf Ursprungsknoten/Zielknoten, ist ein Routenmanagement (mittels der MTP Nachrichten TFP, TFA, RST etc.), welches nur auf eingehendem Link Set/Zielknoten basiert ist, nicht möglich. Eine Anpassung des Congestionmanagements (TFC Nachrichten) wird entweder nicht durchgeführt, oder ist einfach möglich, da in vielen Fällen direkt vom Nachrichtenroutingprozess ausgeführt, weil abhängig vom Zustand der ausgewählten Links.

Basiert das gewählte Routingkonzept beispielsweise auf eingehendem Link Set/Zielknoten, kann z.B. der Nachrichtenroutingprozess ein eingeschränktes Routenmanagement durchführen. Wird festgestellt, daß ein Ziel über keines der zu verwendenden Netze verfügbar ist, wird der Nachbarknoten, von dem die Nachricht empfangen wurde, direkt mittels einer Transfer Prohibited TFP Nachricht über die Nichterreichbarkeit des Zieles informiert. In diesem Fall muß der Nachrichtenroutingprozess auch diejenigen Route-Set-Test RST Nachrichten behandeln und fallweise mit einer Transfer Allowed TFA Nachricht beantworten, welche sich auf einen den zweistufigen Routingprozess verwendenden Nachrichtenfluß beziehen und mittels welcher die Nachbarknoten die Wiederverfügbarkeit eines Ziels testen. Auf die Information der Nachbarknoten über die Erreichbarkeit solcher Ziele durch die sog. Broadcastmethode (siehe Q.704) kann verzichtet werden. Eine Anpassung des Congestionmanagements (TFC Nachrichten) ist auch in diesem Fall entweder einfach möglich oder es wird darauf verzichtet.

In Fällen, in denen die Nachrichten von allen eingehenden Link Sets eines logischen Netzwerkes alle Ziele über dasselbe oder dieselben (logischen) Netzwerke erreichen können, wobei lediglich die Prioritätsreihenfolge dieser Netzwerke je eingehendem Link Set unterschiedlich sein kann, kann ein volles, standardkonformes Netzwerkmanagement ohne Realisierungsaufwand erfolgen, d.h. ohne Anpassung des Netzwerkmanagementprozesses und ohne Übernahme von Netzwerkmanagementaktivitäten durch den Nachrichtenroutingprozeß, wie nachstehend beschrieben.

Eine solche Einschränkung kann in vielen Fällen durchaus sinnvoll sein. Dies sind z.B. Fälle, in denen ein bloßer MTP Netzwerkübergang wie oben erwähnt einfach realisiert werden soll. Ein anderer Fall ist der, in dem das ursprungsabhängige, zweistufige Routing wie eingangs erwähnt zur Lastverteilung verwendet werden soll. Hier ist es sogar wünschenswert, daß Nachrichten zu einem Ziel geroutet werden können, solange es noch eine Verbindung von irgendeinem logischen Netzwerk zu dem Ziel gibt.

Die Realisierung erfolgt einerseits durch Anpassung des Nachrichtenroutingprozesses zur Lenkung wie vorstehend beschrieben. Zusätzlich werden zwischen denjenigen Netzwerken, welche über das zweistufige Routen (über virtuelle Tunnel) verbunden sind, auch physikalische Tunnel gemäß WO99/55098 etabliert. In einem Netz werden nun für alle Ziele, welche über ein anderes, durch die erste Stufe des erfindungsgemäßen Routingprozesseses ausgewähltes Netz erreicht werden, auch in den eigentlichen Routingtabellen Routen über die physikalischen Tunnel eingerichtet. Mit den oben aufgeführten Bedingungen ist die Erreichbarkeit eines Zieles dadurch unabhängig davon, ob es nun über die virtuellen Tunnel, d.h. die erste Stufe des neuen Routingprozesses oder aber über die physikalischen Tunnel, d.h. die eigentliche Routingmatrix, angesteuert wird. Damit können einerseits auch Nachrichten, welche am eigentlichen Routingprozesses vorbei geroutet werden, beispielsweise Nachrichten des Netzwerkmanagement, alle Ziele erreichen, welche über die virtuellen Tunnel erreichbar sind. Andererseits wird das Routenmanagement vollständig durchgeführt. Ist ein Ziel in einem logischen Netzwerk nicht mehr oder wieder erreichbar, werden auch die über physikalische Tunnel verbundenen logischen Netze über diese Zustandsänderungen informiert, so daß das Netzwerkmanagement auch über die logischen Netzwerkgrenzen hinweg voll funktionsfähig ist. Während der Großteil der Nachrichten also den effizienten Weg über die virtuellen Tunnel nehmen, können Netzwerkmanagement Nachrichten die physikalischen Tunnel benutzen. Letztere haben also nur geringe Last zu tragen, verbrauchen also dementsprechend wenig statische und dynamische Ressourcen.

Das vorstehend beschriebene Verfahren wird als hybrider Netzwerktunnel oder hybride Verbindungsgruppe bezeichnet, welche einen Übergang zwischen logischen MTP Netzwerken ermöglichen, wobei die hybriden Verbindungsgruppen oder Tunnel die Vorteile der physikalischen Tunnel (WO99/55098, einfachste Realisierung) mit denen der virtuellen Tunnel (WO00/11883, minimaler statischer und dynamischer Ressourcenbedarf) verbinden.

Im folgenden wird die Erfindung im Zusammenhang mit zwei Figuren als Ausführungsbeispiel näher erläutert.
Figur 1 zeigt eine Netzwerksituation, in welcher die vorliegende Erfindung vorteilhaft angewendet werden kann.
Figur 2 zeigt die Routingmatrix des Netzknotens STP aus Figur 1.

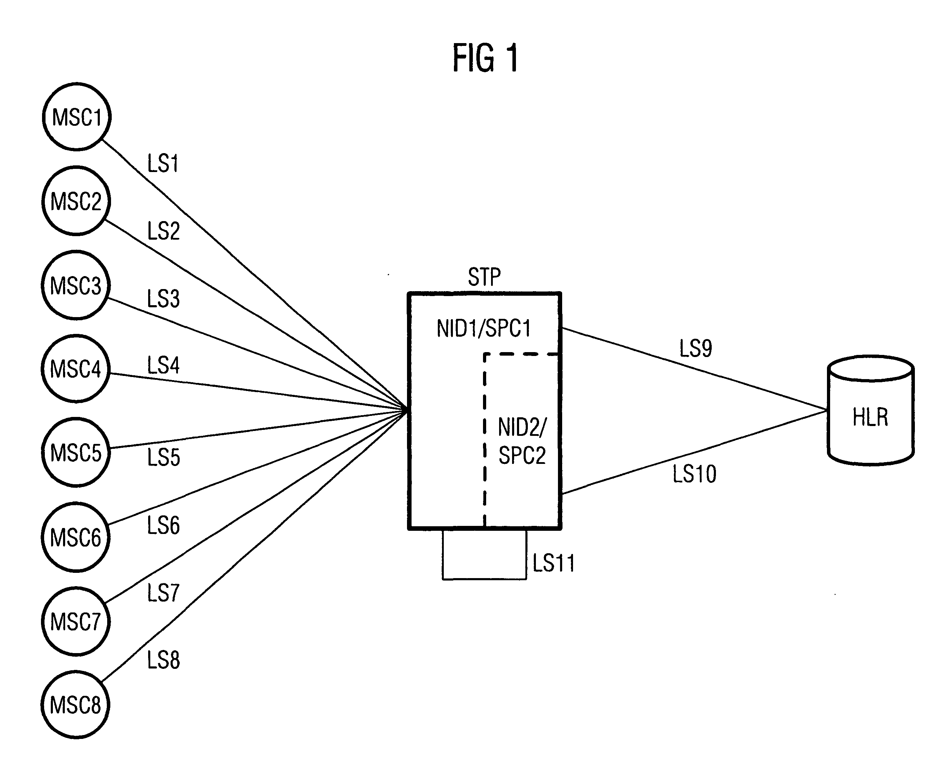

In Figur 1 ist ein vereinfachtes SS7 Netzwerk dargestellt. 8 Mobile Switching Center MSC1..MSC8 sind über einen Signaling Transfer Point STP mit einem Home Location Register HLR verbunden. Die Darstellung ist dahingehend eine vereinfachte Darstellung, als daß in einem SS7 Netzwerk normalerweise weitere Knoten vorhanden sind, z.B. weitere STPs, weitere Signaling Endpoints SEP, weitere HLR und/oder andere Netzwerkelemente. Die in Figur 1 dargestellte Konfiguration ist somit beispielhaft zur Verdeutlichung der erfindungsgemäßen Lehre angegeben, nicht jedoch als die Erfindung einschränkend anzusehen.

Die Erfindung wird beispielsweise benötigt, wenn der z.B. von MSC1..MSC8 ausgehende Verkehr zwischen STP und HLR so stark ist, daß ein einzelnes Link Set LS9, welches bekanntlich maximal 16 Links umfassen kann, diesen Verkehr nicht mehr transportieren kann. Erfindungsgemäß wird in dem STP ein zweites logisches Netzwerk NID2 oder ein zweiter Signaling Point Code SPC2 eingerichtet, wobei das zweite logische Netzwerk NID2 bzw. der zweite Signaling Point Code SPC2 über ein zweites Link Set LS10 mit dem HLR verbunden wird.

MSC1..MSC8, die auch untereinander kommunizieren, sind mit dem STP mittels acht Link Sets LS1..LS8 verbunden und im STP alle in einem Netzwerk NID1 terminiert. Obgleich die Eigenschaft, daß alle Link Sets im gleichen Netzwerk NID1 terminiert sind, Vorteile aufweist, kann die Terminierung ausgewählter Link Sets in gesonderten Netzwerken erfolgen - nicht dargestellt. Die beschriebenen Prinzipien ändern sich dadurch nicht, lediglich die Routingmatrizen werden komplexer, um die komplexere Struktur des Netzwerkes zu berücksichtigen.

Zwischen NID1 und NID 2 wird ein Link Set LS11 vorgesehen. Dieses Link Set ist vorzugsweise physikalisch und besteht beispielsweise aus zwei Links, um gegen Einzelausfälle beständig zu sein.

Im STP werden MSC1..MSC8 anhand des eingehenden Link Set beispielsweise in zwei Gruppen eingeteilt. Verkehr von einer ersten Gruppe MSC1..MSC4 wird primär über das zweite logische Netzwerk NID1 an das HLR geschickt und nur bei Nichtverfügbarkeit der Routen in NID1 über das zweite logische Netzwerk NID2. Verkehr von einer zweiten Gruppe MSC5..MSC8 wird primär über das zweite logische Netzwerk NID2 an das HLR geschickt und nur bei Nichtverfügbarkeit der Routen in NID2 über das erste logische Netzwerk NID1.

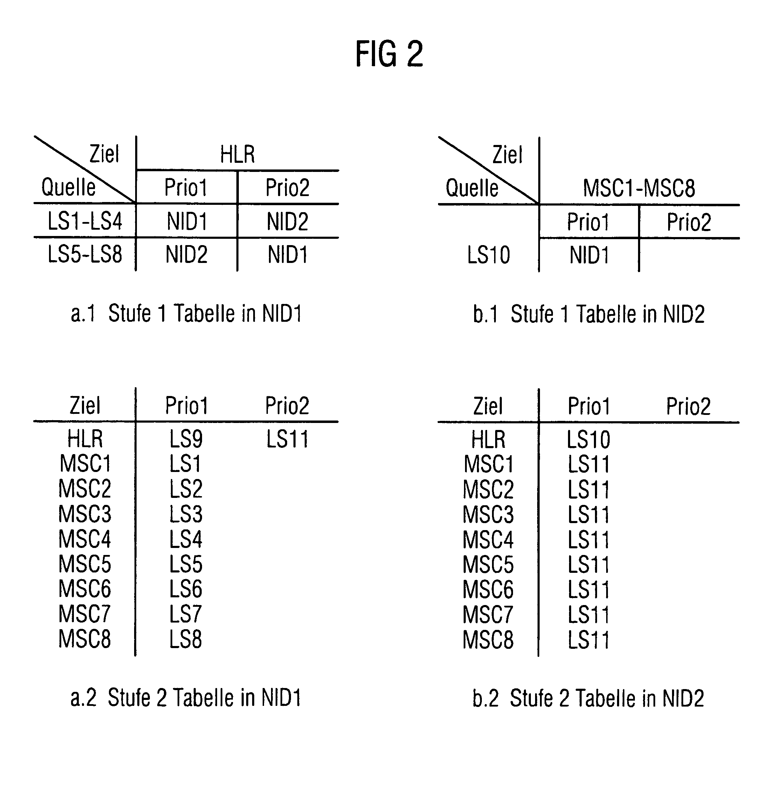

Diese Auswahl wird in der gemäß Stufe 1 der Routing Tabelle a.1 aus Figur 2 getroffen. Nachrichten, deren Ursprungs/Zielkombination nicht in der Stufe 1 Tabelle enthalten ist, beispielsweise Nachrichten, die zwischen MSC1..MSC8 ausgetauscht werden, werden gemäß der Stufe 2 Tabelle a.2 aus Figur 2 geroutet. Für das Ziel HLR ist hier sowohl das direkte Link Set LS9 als auch der physikalische oder virtuelle Tunnel LS11 vorgesehen. Für Nachrichten zu die MSC1..MSC8 sind nur die jeweils direkten Link Sets als Route vorgesehen.

Auch im zweiten logischen Netzwerk NID2 gibt es Routingtabellen der Stufen 1 und 2. Die Tabelle b.1 der Stufe 1 legt für alle Nachrichten von Link Set LS10 mit dem Ziel MSC1..MSC8 das erste Netzwerk NID1 als primäres und einziges Netzwerk fest. Die Tabelle b.2 der Stufe 2 legt für das Ziel HLR das Link Set LS10 und für die Ziele MSC1..MSC8 das Link Set LS11 als Weg fest.

In bekannten Systemen können zur Realisierung der Stufe 1 Tabellen vorteilhaft bestehende Datenstrukturen für das sogenannte Incoming Link Set/DPC Screening verwendet werden, indem ein bestehender Parameter, der die Behandlung einer durch das Screening erfaßten Nachricht festlegt, um die Routingdaten erweitert wird.

Die Erfindung ist ohne weiteres für alle Ausprägungen von SS7-Netzwerken anwendbar, insbesondere für herkömmliche SS7-Netze, bei denen klassische zeitmultiplexe TDM Links eingesetzt werden. Die Erfindung ist ebenfalls anwendbar für SS7-Netze, die durch entsprechende Methoden auf Internetprotokoll IP Netze abgebildet werden, bei denen also beispielsweise IP Verbindungen bzw. IP Links anstelle der TDM Links eingesetzt werden und bei denen Signalisierungspunkte SP A..F mittels IP an ein Kommunikationsnetz angebunden sind. Andere Transportmedien oder Transportprotokolle für SS7 sind im Zusammenhang mit der vorliegenden Erfindung ebenfalls einsetzbar.

Es ist selbstverständlich, daß anstelle der beschriebenen zwei logischen Netzwerke NID1, NID2 bzw. Signaling Point Codes SPC1, SPC2 mehrere Netzwerke bzw. SPC für den Knoten STP vorgesehen werden können, falls beispielsweise der zu übermittelnde Verkehr die Kapazität der beispielhaft dargestellten zwei Link Sets LS9, LS10 übersteigt. Eine Anpassung der Routing Tabellen entsprechend des Ausführungsbeispiels ist dann erforderlich und anhand der im Zusammenhang mit dem Ausführungsbeispiel erläuterten Prinzipien leicht möglich.

Ferner sei darauf hingewiesen, daß zur Auswahl eines der logischen Netze bzw. der Signaling Point Codes für das Weiterleiten der Nachrichten im STP andere Kriterien oder Parameter, die den Ursprung einer Nachricht charakterisieren, verwendet werden können. Eine Kombination des erfindungsgemäßen Prinzips mit bekannten Mechanismen zur Nachrichtenlenkung und/oder Lastverteilung ist ohne weiteres ausführbar.

## Patentansprüche

1. Verfahren zur Nachrichtenlenkung in einem Knoten (STP) eines Kommunikationsnetzwerkes, wobei
- der Knoten (STP), ein erstes Netzelement (HLR) und weitere Netzelemente (MSC1..MSC8) Bestandteil eines ersten logischen Netzwerkes (NID1) sind,
- zumindest der Knoten (STP) außerdem Bestandteil zumindest eines zweiten logischen Netzwerkes (NID2) ist,
- der Knoten (STP) über zumindest eine erste Verbindungsgruppe (LS9) im ersten logischen Netzwerk (NID1) und über zumindest eine zweite Verbindungsgruppe (LS10) mit dem ersten Netzelement (HLR) verbunden ist,
- der Knoten über mindestens je eine weitere Verbindungsgruppe (LS1..LS8) mit den weiteren Netzelementen (MSC1..MSC8) verbunden ist,
- demgemäß für die Übermittlung von Nachrichten von den weiteren Netzelementen (MSC1..MSC8) an das erste Netzelement (HLR) die erste Verbindungsgruppe (LS9) oder die zweite Verbindungsgruppe (LS10) anhand einer Ursprungskennung des die Nachricht sendenden weiteren Netzelementes (MSC1..MSC8) ausgewählt wird.

2. Verfahren zur Nachrichtenlenkung in einem Knoten (STP) eines Kommunikationsnetzwerkes, wobei
- der Knoten (STP) den Nachrichtenverkehr zwischen einem erstes Netzelement (HLR) und weiteren Netzelementen (MSC1..MSC8) transferiert,
- der Knoten (STP) über eine erste Verbindungsgruppe (LS9) und über zumindest eine zweite Verbindungsgruppe (LS10) mit dem ersten Netzelement (HLR) verbunden ist,
- der Knoten über mindestens je eine weitere Verbindungsgruppe (LS1..LS8) mit den weiteren Netzelementen (MSC1..MSC8) verbunden ist,
- demgemäß für die Kommunikation zwischen dem Knoten (STP) und dem ersten Netzelement (HLR) im Knoten (STP) mindestens zwei Kommunikationsadressen (SPC1, SPC2) vorgesehen sind, wobei jeder Kommunikationsadresse (SPC1, SPC2) genau eine der Verbindungsgruppen (LS9, LS10) zwischen dem Knoten (STP) und dem ersten Netzelement (HLR) zugeordnet wird, und
- demgemäß für die Übermittlung von Nachrichten von den weiteren Netzelementen (MSC1..MSC8) an das erste Netzelement (HLR) die erste Verbindungsgruppe (LS9) mit zugeordneter erster Kommunikationsadresse (SPC1) oder die zweite Verbindungsgruppe (LS10) mit zugeordneter zweiter Kommunikationsadresse (SPC2) anhand einer Ursprungskennung des die Nachricht sendenden weiteren Netzelementes (MSC1..MSC8) ausgewählt wird.

3. Verfahren nach einem der Ansprüche 1 oder 2,
**dadurch gekennzeichnet,**
**daß** die Ursprungskennung durch eine jedes der weiteren Netzelemente (MSC1..MSC8) eineindeutig charakterisierende Adresse oder durch eine eineindeutige Kennung der weiteren Verbindungsgruppe (LS1..LS8), über welche eine Nachricht empfangen wurde oder durch eine Kombination dieser Adresse und Kennung gebildet wird.

4. Verfahren nach einem der Ansprüche 1 bis 3,
**dadurch gekennzeichnet,**
- **daß** im Knoten (STP) für die Übermittlung von Nachrichten zum ersten Netzelement (HLR) in einem ersten Schritt eines der logischen Netzwerke (NID1, NID2) oder eine der Kommunikationsadressen (SPC1, SPC2) ausgewählt wird, und
- **daß** in einem zweiten Schritt gemäß einer für die Auswahl des ersten Schrittes geltenden, die Prioritäten der jeweils möglichen Verbindungsgruppen (LS9, LS10) berücksichtigenden Liste die Verbindungsgruppe (LS9, LS10) mit der höchsten Priorität, die ungestört ist, ausgewählt wird.

5. Verfahren nach Anspruch 4,
**dadurch gekennzeichnet,**
**daß** für die Auswahl im ersten Schritt zusätzlich Sequenzfelder oder andere Felder oder Merkmale der zu übertragenden Nachricht berücksichtigt werden.

6. Verfahren nach einem der Ansprüche 1 bis 5,
**dadurch gekennzeichnet,**
**daß** die Nachrichten zwischen dem ersten und zweiten logischen Netz (NID1, NID2) oder den Kommunikationsadressen (SPC1, SPC2) über eine bezüglich des Knotens (STP) interne oder externe oder hybride Verbindungsgruppe (LS11) übertragen werden werden.

7. Verfahren nach einem der Ansprüche 1 bis 6,
**dadurch gekennzeichnet,**
**daß** in dem Kommunikationsnetz das Signalisierungssystem 7 SS7 vorgesehen ist, wobei das erste Netzelement und die weiteren Netzelemente beliebige Signalisierungspunkte sind und der Knoten ein Signaling Transfer Point ist und wobei die Verbindungsgruppen (LS1..LS10) Signaling Link Sets sind, die jeweils aus mindestens einem Signaling Link gebildet werden.

8. Signaling Transfer Point (STP) eines SS7-Netzes, der folgendes aufweist:
- Mittel zum Senden und Empfangen von Nachrichten von einem ersten Signaling Point (HLR) über ein erstes Link Set (LS9) und zumindest ein zweites Link Set (LS10),
- Mittel zum Senden und Empfangen von Nachrichten von weiteren Signaling Points (MSC1..MSC8) über weitere Link Sets (LS1..LS8),
- Mittel zur Nachrichtenlenkung, die derart ausgestaltet sind, Nachrichten anhand von Eigenschaften des die Nachricht sendenden Signaling Point (MSC1..MSC8) zum ersten Signaling Point (HLR) über ein Link Set unter den zur Verfügung stehenden Link Sets (LS9, LS10) zu leiten.

9. Signaling Transfer Point (STP) nach Anspruch 8,
**dadurch gekennzeichnet,**
**daß** die Mittel zum Senden und Empfangen von Nachrichten von einem ersten Signaling Point (HLR) ein erstes logisches Netzwerk (NID1) und zumindest ein zweites logisches Netzwerk (NID2) umfassen, wobei dem zweiten logischen Netzwerk (NID2) zumindest das zweite Link Set (LS10) zugeordnet ist und alle weiteren Link Sets (LS1..LS9) dem ersten logischen Netzwerk (NID1) zugeordnet sind.

10. Signaling Transfer Point (STP) nach einem der Ansprüche 8 oder 9,
**dadurch gekennzeichnet,**
**daß** die Mittel zum Senden und Empfangen von Nachrichten von einem ersten Signaling Point (HLR) einen ersten Signaling Point Code (SPC1) und zumindest einen zweiten Signaling Point Code (SPC2) umfassen, wobei dem zweiten Signaling Point Code (SPC2) zumindest das zweite Link Set (LS10) zugeordnet ist und alle weiteren Link Sets (LS1..LS9) dem ersten Signaling Point Code (SPC1) zugeordnet sind.

11. Signaling Transfer Point (STP) nach einem der Ansprüche 9 oder 10,
**dadurch gekennzeichnet,**
**daß** die Mittel zur Nachrichtenlenkung folgendes umfassen:
- zumindest eine erste Prioritätentabelle zur Auswahl des logischen Netzwerks (NID1, NID2) oder des Signaling Point Code (SPC1, SPC2) basierend auf dem Origination Point Code OPC einer empfangenen Nachricht oder auf dem Bezeichner des eingehenden Link Sets oder einer Kombination aus OPC und Bezeichner sowie auf dem Destination Point Code DPC einer empfangenen Nachricht,
- Auswahlmittel zur Bestimmung des logischen Netzwerks (NID1, NID2) oder des Signaling Point Code (SPC1, SPC2) basierend auf der ersten Prioritätentabelle, wobei die Auswahlmittel derart ausgestaltet sind, nicht verfügbare logischen Netzwerke oder Signaling Point Codes zu berücksichtigen,
- Transfermittel zum Weiterleiten der zu übermittelnden Nachricht an das ausgewählte logische Netzwerk oder den ausgewählten Signaling Point Code,
- zumindest eine zweite Prioritätentabelle zur Auswahl des ausgehenden Link Sets,
- Auswahlmittel zur Bestimmung des ausgehenden Link Sets basierend auf der zweiten Prioritätentabelle, wobei die Auswahlmittel derart ausgestaltet sind, nicht verfügbare Link Sets zu berücksichtigen.

## Claims

1. Method for routing messages in a node (STP) of a communication network, wherein
- the node (STP), a first network element (HLR) and further network elements (MSC1..MSC8) are part of a first logical network (NID1),
- at least the node (STP) is also part of at least one second logical network (NID2),
- the node (STP) is connected to the first network element (HLR) via at least one first connection group (LS9) in the first logical network (NID1) and via at least one second connection group (LS10),
- the node is connected to the further network elements (MSC1..MSC8) via at least one further connection group (LS1..LS8) in each case,
- accordingly, for the transmission of messages from the further network elements (MSC1..MSC8) to the first network element (HLR), the first connection group (LS9) or the second connection group (LS10) is selected on the basis of a source identification of the further network element (MSC1..MSC8) sending the message.

2. Method for routing messages in a node (STP) of a communication network, wherein
- the node (STP) transfers the message traffic between a first network element (HLR) and further network elements (MSC1..MSC8),
- the node (STP) is connected to the first network element (HLR) via a first connection group (LS9) and via at least one second connection group (LS10),
- the node is connected to the further network elements (MSC1..MSC8) via at least one further connection group (LS1..LS8) in each case,
- accordingly, at least two communication addresses (SPC1, SPC2) are then provided for the communication between the node (STP) and the first network element (HLR) in the node (STP), with precisely one of the connection groups (LS9, LS10) between the node (STP) and the first network element (HLR) being assigned to each communication address (SPC1, SPC2), and
- accordingly, for the transmission of messages from the further network elements (MSC1..MSC8) to the first network element (HLR), the first connection group (LS9) with assigned first communication address (SPC1) or the second connection group (LS10) with assigned second communication address (SPC2) is selected on the basis of a source identification of the further network element (MSC1..MSC8) sending the message.

3. Method according to one of the Claims 1 or 2,
**characterised in that**
the source identification is formed by an address uniquely characterising each of the further network elements (MSC1..MSC8) or by a unique identification of the further connection group (LS1..LS8) via which a message was received or by a combination of this address and identification.

4. Method according to one of the Claims 1 to 3,
**characterised in that**
- in a first step, one of the logical networks (NID1, NID2) or one of the communication addresses (SPC1, SPC2) is selected in the node (STP) for the transmission of messages to the first network element (HLR), and
- in a second step, the connection group (LS9, LS10) with the highest priority which is operational is selected according to a list applicable to the selection of the first step and taking into account the priorities of the possible connection groups (LS9, LS10) in each case.

5. Method according to Claim 4,
**characterised in that**
sequence fields or other fields or features of the message to be transmitted are taken into account for the selection made in the first step.

6. Method according to one of the Claims 1 to 5,
**characterised in that**
the messages between the first and second logical networks (NID1, NID2) or the communication addresses (SPC1, SPC2) are transmitted via an internal or external or hybrid connection group (LS11) in respect of the node (STP).

7. Method according to one of the Claims 1 to 6,
**characterised in that**
the signalling system 7 SS7 is provided in the communication network, with the first network element and the further network elements being any signalling points and the node being a signalling transfer point, and with the connection groups (LS1..LS10) being signalling link sets, each of which is formed from at least one signalling link.

8. Signalling transfer point (STP) of an SS7 network, having the following:
- means for sending and receiving messages from a first signalling point (HLR) via a first link set (LS9) and at least one second link set (LS10),
- means for sending and receiving messages from further signalling points (MSC1..MSC8) via further link sets (LS1..LS8),
- means for message routing which are embodied to route messages based on characteristics of the signalling point (MSC1..MSC8) sending the message to the first signalling point (HLR) via one link set from among the available link sets (LS9, LS10).

9. Signalling transfer point (STP) according to Claim 8,
**characterised in that**
the means for sending and receiving messages from a first signalling point (HLR) comprise a first logical network (NID1) and at least one second logical network (NID2), with at least the second link set (LS10) being assigned to the second logical network (NID2) and all further link sets (LS1..LS9) being assigned to the first logical network (NID1).

10. Signalling transfer point (STP) according to one of the Claims 8 or 9,
**characterised in that**
the means for sending and receiving messages from a first signalling point (HLR) comprise a first signalling point code (SPC1) and at least one second signalling point code (SPC2), with at least the second link set (LS10) being assigned to the second signalling point code (SPC2) and all further link sets (LS1..LS9) being assigned to the first signalling point code (SPC1).

11. Signalling transfer point (STP) according to one of the Claims 9 or 10,
**characterised in that**
the means for routing messages comprise the following:
- at least a first priority table for selecting the logical network (NID1, NID2) or the signalling point code (SPC1, SPC2) based on the origination point code OPC of a received message or on the identifier of the incoming link set or a combination of OPC and identifier and on the destination point code DPC of a received message,
- selection means for determining the logical network (NID1, NID2) or the signalling point code (SPC1, SPC2) based on the first priority table, with the selection means being embodied so as to take unavailable logical networks or signalling point codes into account,
- transfer means for forwarding the message to be transmitted to the selected logical network or the selected signalling point code,
- at least one second priority table for selecting the outgoing link set,
- selection means for determining the outgoing link set based on the second priority table, with the selection means being embodied so to take unavailable link sets into account.

## Revendications

1. Méthode de routage de messages dans un noeud (STP) d'un réseau de communication,
- le noeud (STP), un premier élément de réseau (HLR) et d'autres éléments de réseau (MSC1 ... MSC8) étant des parties composantes d'un premier réseau logique (NID1),
- au moins le noeud (STP) étant en outre une partie composante d'au moins un deuxième réseau logique (NID2),
- le noeud (STP) étant relié au premier élément de réseau (HLR) par l'intermédiaire d'au moins un premier groupe de connexions (LS9) dans le premier réseau logique (NID1) et par l'intermédiaire d'au moins un deuxième groupe de connexions (LS10),
- le noeud étant relié aux autres éléments de réseau (MSC1 ... MSC8) par l'intermédiaire d'au moins respectivement un autre groupe de connexions (LS1 ... LS8),
- le premier groupe de connexions (LS9) ou le deuxième groupe de connexions (LS10) étant conséquemment sélectionné, pour le transfert de messages des autres éléments de réseau (MSC1 ... MSC8) vers le premier élément de réseau (HLR), à l'aide d'une identification de source de l'autre élément de réseau (MSC1 ... MSC8) qui émet le message.

2. Méthode de routage de messages dans un noeud (STP) d'un réseau de communication,
- le noeud (STP) transférant le trafic de messages entre un premier élément de réseau (HLR) et d'autres éléments de réseau (MSC1 ... MSC8),
- le noeud (STP) étant relié au premier élément de réseau (HLR) par l'intermédiaire d'un premier groupe de connexions (LS9) et par l'intermédiaire d'au moins un deuxième groupe de connexions (LS10),
- le noeud étant relié aux autres éléments de réseau (MSC1 ... MSC8) par l'intermédiaire d'au moins respectivement un autre groupe de connexions (LS1 ... LS8),
- au moins deux adresses de communication (SPC1, SPC2) étant conséquemment prévues dans le noeud (STP) pour la communication entre le noeud (STP) et le premier élément de réseau (HLR), exactement l'un des groupes de connexions (LS9, LS10) entre le noeud (STP) et le premier élément de réseau (HLR) se voyant affecté à chaque adresse de communication (SPC1, SPC2) et
- le premier groupe de connexions (LS9) avec la première adresse de communication (SPC1) associée ou le deuxième groupe de connexions (LS10) avec la deuxième adresse de communication (SPC2) associée étant conséquemment sélectionné, pour le transfert de messages des autres éléments de réseau (MSC1 ... MSC8) vers le premier élément de réseau (HLR), à l'aide d'une identification de source de l'autre élément de réseau (MSC1 ... MSC8) qui émet le message.

3. Méthode selon l'une des revendications 1 ou 2, **caractérisée en ce que** l'identification de source est formée par une adresse caractérisant bi-univoquement chacun des autres éléments de réseau (MSC1 ... MSC8) ou par une identification bi-univoque de l'autre groupe de connexions (LS1 ... LS8) par l'intermédiaire duquel un message a été reçu ou par une combinaison de cette adresse et de cette identification.

4. Méthode selon l'une des revendications 1 à 3, **caractérisée en ce que**
- dans une première étape, l'un des réseaux logiques (NID1, NID2) ou l'une des adresses de communication (SPC1, SPC2) est sélectionné dans le noeud (STP) pour le transfert de messages vers le premier élément de réseau (HLR) et
- dans une deuxième étape, le groupe de connexions (LS9, LS10) avec la priorité maximale, lequel n'est pas perturbé, est sélectionné selon une liste valable pour la sélection de la première étape et tenant compte des priorités des groupes de connexions (LS9, LS10) respectivement possibles.

5. Méthode selon la revendication 4, **caractérisée en ce que**, pour la sélection, à la première étape, des champs de séquence ou d'autres champs ou caractéristiques du message à transmettre sont additionnellement pris en compte.

6. Méthode selon l'une des revendications 1 à 5, **caractérisée en ce que** les messages sont transmis entre le premier et le deuxième réseaux logiques (NID1, NID2) ou les adresses de communication (SPC1, SPC2) par l'intermédiaire d'un groupe de connexions (LS11) interne ou externe ou hybride par rapport au noeud (STP).

7. Méthode selon l'une des revendications 1 à 6, **caractérisée en ce que** le système de signalisation 7 SS7 est prévu dans le réseau de communication, le premier élément de réseau et les autres éléments de réseau étant des points sémaphores quelconques et le noeud étant un point de transfert sémaphore (Signalling Transfer Point) et les groupes de connexions (LS1 ... LS10) étant des faisceaux de canaux sémaphores (Signalling Link Sets) qui sont respectivement formés à partir d'au moins un canal sémaphore (Signalling Link).

8. Point de transfert sémaphore (Signalling Transfer Point) (STP) d'un réseau SS7, comprenant:
- des moyens pour émettre et recevoir des messages d'un premier point sémaphore (Signalling Point) (HLR) par l'intermédiaire d'un premier faisceau de canaux (Link Set) (LS9) et d'au moins un deuxième faisceau de canaux (Link Set) (LS10),
- des moyens pour émettre et recevoir des messages d'autres points sémaphores (Signalling Points) (MSC1 ... MSC8) par l'intermédiaire d'autres faisceaux de canaux (Link Sets) (LS1 ... LS8),
- des moyens de routage de messages, réalisés de manière à router des messages, à l'aide de caractéristiques du point sémaphore (Signalling Point) (MSC1 ... MSC8) émettant le message, vers le premier point sémaphore (Signalling Point) (HLR) par l'intermédiaire d'un faisceau de canaux (Link Set) parmi les faisceaux de canaux (Link Sets) (LS9, LS10) disponibles.

9. Point de transfert sémaphore (Signalling Transfer Point) (STP) selon la revendication 8, **caractérisé en ce que** les moyens pour émettre et recevoir des messages d'un premier point sémaphore (Signalling Point) (HLR) comprennent un premier réseau logique (NID1) et au moins un deuxième réseau logique (NID2), au moins le deuxième faisceau de canaux (Link Set) (LS10) étant affecté au deuxième réseau logique (NID2) et tous les autres faisceaux de canaux (Link Sets) (LS1 ... LS9) étant affectés au premier réseau logique (NID1).

10. Point de transfert sémaphore (Signalling Transfer Point) (STP) selon l'une des revendications 8 ou 9, **caractérisé en ce que** les moyens pour émettre et recevoir des messages d'un premier point sémaphore (Signalling Point) (HLR) comprennent un premier code de point sémaphore (Signalling Point Code) (SPC1) et au moins un deuxième code de point sémaphore (Signalling Point Code) (SPC2), au moins le deuxième faisceau de canaux (Link Set) (LS10) étant affecté au deuxième code de point sémaphore (Signalling Point Code) (SPC2) et tous les autres faisceaux de canaux (Link Sets) (LS1 ... LS9) étant affectés au premier code de point sémaphore (Signalling Point Code) (SPC1).

11. Point de transfert sémaphore (Signalling Transfer Point) (STP) selon l'une des revendications 9 ou 10, **caractérisé en ce que** les moyens de routage de messages comprennent:
- au moins une première table de priorités pour sélectionner le réseau logique (NID1, NID2) ou le code de point sémaphore (Signalling Point Code) (SPC1, SPC2) sur la base de l'«Origination Point Code» OPC d'un message reçu ou du désignateur du faisceau de canaux (Link Set) entrant ou d'une combinaison de l'OPC et du désignateur ainsi que du code de point de destination (Destination Point Code) DPC d'un message reçu,
- des moyens de sélection pour déterminer le réseau logique (NID1, NID2) ou le code de point sémaphore (Signalling Point Code) (SPC1, SPC2) sur la base de la première table de priorités, les moyens de sélection étant réalisés de manière à tenir compte de réseaux logiques ou de codes de point sémaphore (Signalling Point Codes) non disponibles,
- des moyens de transfert pour réacheminer vers le réseau logique sélectionné ou le code de point sémaphore (Signalling Point Code) sélectionné le message à transférer,
- au moins une deuxième table de priorités pour sélectionner le faisceau de canaux (Link Set) sortant,
- des moyens de sélection pour déterminer le faisceau de canaux (Link Set) sortant sur la base de la deuxième table de priorités, les moyens de sélection étant réalisés de manière à tenir compte de faisceaux de canaux (Link Sets) non disponibles.
